# EUROPEAN PATENT APPLICATION

(11) **EP 4 513 930 A1**
(43) Date of publication of application: **26.02.2025**
(21) Application number: 23315324.6
(22) Date of filing: 24.08.2023
(51) Int. Cl.: H04W 12/30, H04W 12/40, H04W 12/126, H04L 9/40, H04W 12/0471

(54) **A METHOD FOR EXPORTING A TELECOMMUNICATION PROFILE FROM A SOURCE SECURE ELEMENT TO A TARGET SECURE ELEMENT AND CORRESPONDING SECURE ELEMENTS**

(71) Applicant: THALES DIS FRANCE SAS, 92190 Meudon (FR)
(72) Inventor: Phan, Ly-Thanh, 92350 LE PLESSIS-ROBINSON (FR); Praca, Denis, 13080 LUYNES (FR); Regnault, Nicolas, 13600 LA CIOTAT (FR); Imoucha, Franck, 13390 AURIOL (FR); Marseille, Francois Xavier, 78160 MARLY LE ROI (FR)
(74) Representative: Scheer, Luc

(57) **Abstract**

The invention concerns a A method for exporting a telecommunication profile from a source secure element (10) to a target secure element (13) through the LPAs of devices comprising the source and target secure elements (10, 13), the method comprising:
- sending from the source secure element (10) its certificate and at least a signed profile ID to the target secure element (13);
- verifying at the target secure element (13) the validity of the certificate based on the source certificate and signed profile ID;
- if the verification is positive, sending from the target secure element (13) to the source secure element (10) a signed download request of the profile and a certificate of the target secure element (13);
- at the source secure element (10), verifying the certificate of the target secure element (13) authenticity, generating a Profile Encryption Key, PEK, and a Credential Encryption Key, CEK;
- Ciphering the credentials of the profile with CEK;
- Ciphering the profile including the ciphered credentials with PEK;
- Ciphers CEK and PEK respectively into CEK* and PEK* with the target secure element (13) public key;
- Sending from the source secure element (10) to the target secure element (13) the ciphered profile and the PEK*;
- at the target secure element (13), deciphering the received PEK* with its private key to obtain PEK, deciphering the profile with PEK and installing the profile;
- sending from the target secure element (13) to the source secure element (10) a first signed message indicating that the profile has been installed successfully;
- at the source secure element (1O), when receiving the first signed message indicating that the profile has been installed successfully, removing the profile and sending to the target secure element (13) a second signed message with the source secure element (10) private key indicating that the profile in the source secure element (10) has been removed successfully and CEK*;
- at the target secure element (13), verifying the validity of the second signed message, deciphering CEK* to obtain CEK and deciphering the credentials with CEK.

## Description

The invention concerns telecommunication and in particular the peer-to-peer transfer of a profile between two secure elements, like embedded SIMs, also called embedded UICCs (elllCCs) or integrated UICCs (iUICCs).

Peer to peer transfer of a profile is a feature that is not authorized for the moment by the GSMA RSP specification, but it has been demonstrated that in could be done in a proprietary way. There are some issues arising from this type of transfer.

First is how to provide some control or the control of this transfer by the profile owner. This transfer, again, is peer to peer without involving the remote server system in order to authorize or to do the transfer. But the first thing is how to provide a control for the profile owner (the MNO - Mobile Network Operator) to control such transfer, authorize or not authorize the transfer, and how to authorize such transfer under specific conditions. The MNO is issuing the profile for a given user and for a given apparatus in which the secure element is embedded. To summarize, what are the conditions provided by the profile owner that needs to be verified?

The second point, which is the core to the transfer, is to ensure atomicity of the transfer to prevent cloning of the profile while providing ease of use. Preventing cloning means avoiding a double transfer of the same profile to two different devices and activated in these two different devices. This has to be prevented absolutely.

Another important point is to avoid losing a profile while providing such an anti-cloning system. In the known prior art (GSMA specification SGP21 V3.0), there are some protections in terms of authorization: There are rules defined in the policies that mention whether to delete a profile or whether a profile can be activated, but these rules are not related to this transfer.

The present invention has the purpose to propose a solution to these problems.

More precisely, the invention proposes a method according to claim 1 and secure elements according to claims 2 and 3

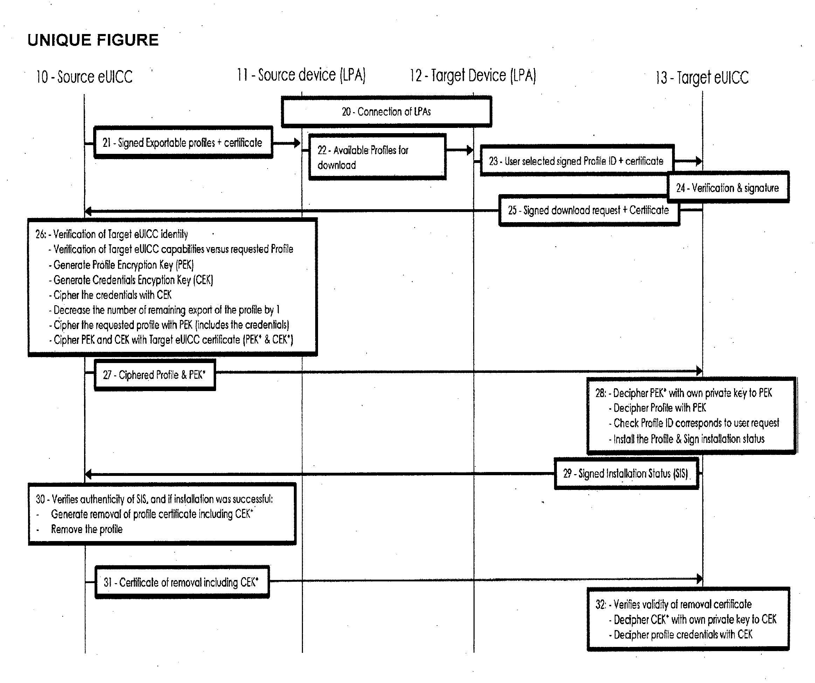

The invention will be better understood by reading the following description of the unique figure that represents exchanges between a source and a target secure element (here eUICCs).

The represented entities are:
- a source eUICC 10
- a LPA of a source device 11
- a LPA of a target device 12
- a target eUICC 13

The source or target eUICCs could also be iUICCs.

The unique figure represents a flowchart of the exchanges between these different entities. The source eUICC 10 is the one in which the profile is stored and the target eUICC 13 is the one in which this profile has to be downloaded from the source eUtCC 10.

Globally, a LPA cannot be considered as a trusted entity. But they are needed in order to at least provide the initial connectivity between the eUICCs and the LPAs are there just to pass the profile packet between the source and the target eUICCs. The connection of LPAs is referenced 20 in the figure and can be done through any connectivity, for example through a telecommunication network (4G, 5G,...), Wifi, Bluetooth, or even through a USB cable.

In order to do the transfer of a profile, it is mandatory to make sure that the target eUICC 13 knows which profile is exported from the source eUICC 10.

For that, in a first step, referenced 21, the source eUlCC 10 exports its certificate with a signed list of the exportable profiles it contains and everything is signed. This is the case where several profiles exist at the level of the source eUICC 10. This source eUICC 10 can also contain only a single profile. This export is received by the LPA of the source device 11 and the user selects the available profiles that he wants to be downloaded in the target eUICC 13 (step 22).

At step 23, the target LPA provides the signed profile ID(s) selected by the user and the source certificate to the target eUICC 13. The LPAs are completely transparent here.

The target eUlCC 13 (step 24) then verifies the validity of the source certificate based on the source certificate and signed profile ID(s). The target eUICC 13 is thus able to verify the certificate of the source eUICC 10 to make sure that the profile comes from a trusted source based on a GSMA certificate of the source eUICC 10.

Among the profiles that are provided based on user's consent or user's acceptance, whatever, the target eUICC 13 signs the profile(s) to be downloaded (its/their ID(s) in fact). More precisely, the target eUICC 13 generates a signed request to download the selected profile(s) including the selected profile(s) ID(s), the target eUICC 13 certificate and eUICC 13 capabilities. This request is sent to the source eUICC 10 at step 25.

So, at the end of this stage, we have a mutually authenticated embedded source eUICC 10 and target eUICC 13. We have also at least a signed download profile request from target eUICC 13.

So, this type of transfer is very similar to what an eUICC would do with the RSP system. But in the discussed invention, the target eUICC 13 is talking to another eUlCC 10 and it has to verify its certificate.

This transfer can be done completely encrypted or not. It depends on the configuration. The important point is that the answer from the target eUICC 13 to the source eUICC 10 to ask for a download of at least a profile is signed by the target eUICC 13 so that the source eUICC 10 can verify also the identity of the target eUICC 13.

The source eUICC 10 can be considered as a machine dedicated to distribute profiles to different target eUICCs 13 (it can store multiple profiles and corresponding certificates).

From there, verification of the target eUICC 13 identity by the source eUICC 10 can begin.

This step is realized during step 26 where the source eUICC 10:
- Verifies the validity of the received request;
- Verifies the certificate of the target eUICC 13 and its authenticity and that the selected profile is among the exportable profiles. This corresponds to a verification of the capability of the target eUICC 13 versus the requested profile to make sure that it can be executed and installed correctly on the target eUICC 13;
- Verifies the eligibility of the target eUICC 13 to install the selected profile;
- Generates a Profile Encryption Key (PEK) and a Credential Encryption Key (CEK).

The generation of these two keys, one (PEK) to encrypt the profile to make sure that only the target eUICC 13 can decrypt the profile and the credential encryption key CEK are the steps that will ensure atomicity of the transaction. The key CEK is specific to encrypt the long term key (and other credentials like oPC for example), of the profile that is going to be exported.

Then, the source eUICC 10:
- Ciphers the credentials (e.g. the eUICC's 10 long term key K) with CEK;
- Decreases the number of remaining exports of the profile by 1. This is not a mandatory step;
- Ciphers the requested profile including the ciphered credentials with PEK;
- Ciphers CEK and PEK respectively into CEK* and PEK* with the target certificate (the target certificate is a public key).

In other words, the source eUICC 10 encrypts the credentials with the CK key first, and then after decreases the number of exportations of this profile and ciphers the whole profile with the PEK key. Here at the end, we have a profile that is encrypted and the credentials which are encrypted with another key. The whole profile can then be exported.

The profile key is encrypted by the public key of the target eUICC 13 so that only the target eUICC 13 can decrypt it with its private key.

At step 27, the source eUICC 10 sends to the target eUlCC 13 the ciphered entire profile (among with the credentials Ki, OPc, ri, ci for the Milenage algorithm...) and the ciphered key PEK*.

At step 28, the target eUICC 13:
- Deciphers the received PEK* with its private key to obtain PEK;
- Deciphers the received profile with PEK. At this moment, the credentials are still encrypted by the CEK key (the credentials encryption key), so that even if the transaction is terminated here because of whatever reason, the target eUICC 13 cannot use the profile because the long term key or the credentials of the profile are still encrypted by CEK* and the target eUICC 13 does not know CEK*.
- Verifies the validity of the received ciphered profile and that it corresponds to the user selected profile ID;
- If the deciphered profile is valid, installs the profile and generates a Signed Installation Status (SIS).

The next step is for the target eUICC 13, once it has installed the profile and make sure that it could be used, to sign an installation status message acknowledgement and send it to the source eUICC 10. Now, when the source eUICC 10 receives it, it can be sure that the target eUICC 13 has the profile installed correctly and can be run. But the only missing part is the credentials that are still encrypted at the level of the target eUICC 13.

At step 29, the target eUICC 13 sends the SIS to the source eUICC 10.

At step 30, the source eUICC 10:
- Verifies the validity of the SIS and, if the installation of the profile in the target eUICC 13 was successful, and depending on the Profile Issuer Policy, removes the stored profile;
- Generates a certificate of removal including the profile ID of the removed profile and the CEK*, signed with its private key.

In other words, when the source eUICC 10 receives the acknowledgement from the target eUICC 13, it first verifies the signature of this message and then generates a removal of the profile certificate that includes the CEK* (the key that has encrypted the credentials of the profile), and then it removes the stored profile. This is done because from now it is sure that the profile has been removed from the source eUICC 10 and this certificate can be sent to the target eUICC 13. The target eUlCC 13 can decrypt everything and decrypt the encryption key to decrypt the credentials and use the profile. Here, the point is what could happen if the certificate is missed or lost? The invention also proposes optionally to store this certificate in the source device LPA 11 or in the source UICC 10 so that it can be read or resent again to the target eUlCC 13. To make sure that even if during the transfer this certificate is lost or not received by the target eUICC 13, it can still retrieve it and activate it because this message is just a certificate plus encrypted key that remain in this context and encrypted with the public key of the target only so that only the target eUlCC 13 can decrypt it.

At step 31, the source eUICC 10 sends the signed certificate of removal to the target eUICC 13. At step 32, the target eUICC 13:
- Verifies the validity of the certificate of removal;
- Deciphers the CEK* with its private key to obtain CEK;
- Deciphers the profile credentials with CEK.

The target eUICC 13 can then install the profile credentials.

The target eUICC 13, upon removal of the profile certificate and the CEK*, can duplicate the certificate in order to be able to proof to the MNO that the subscription has not been duplicated. Optionally, the metadata of the profile include the following additional policies:
- Whether the profile is exportable or not;
- The number of times it can still be exported;
- Which target eUICC version could receive an exported profile;
- Which action to be performed by the source eUICC when export is successful (delete profile, deactivate profile...);
- Which action the target eUICC has to perform to activate the profile (e.g.
   nothing, or inform a remote server of the transfer).

Thus, the profile can contain some additional fields in the metadata in order to authorize the transfer of the profile, the number of transfers possible that is decreased every time it is transferred so that the target can transfer the profile to another eUICC, but maybe the operator wants to customize that and limit that option also before downloading a new profile, for example. Then some actions, whether the transfer is successful or in case of unsuccessful transfer, we can imagine other parameters to be put in the metadata. The LPA may store the transfer audit information, so to know whether some profiles have been transferred correctly to some eUICCs, etc.

Optionally, the target LPA may also require the indication or notification to the issuer or to the SM-DP+, as said before, that the transfer has been done correctly or not.

The advantage is that we allow the issue of the profiles of the MNO to control the peer to peer transfer. The solution avoids the need of the remote server and then allows the MNO to control fully the transfer, offline transfer of the profiles.

As before said, the LPA 11 may store the certificate of removal, so that is it is available for audit or resend to a target eUICC 13 when necessary.

The invention also concerns a source secure element 10, configured for exporting a telecommunication profile to a target secure element 13 through the LPAs of devices comprising the source and target secure elements 10, 13, the source secure element 10 being configured for:
- sending its certificate and at least a signed profile ID to the target secure element 13;
- receiving from the target secure element 13 a signed download request of the profile and a certificate of the target secure element 13;
- verifying the certificate of the target secure element 13 authenticity, generating a Profile Encryption Key, PEK, and a Credential Encryption Key, CEK;
- Ciphering the credentials of the profile with CEK;
- Ciphering the profile including the ciphered credentials with PEK;
- Ciphering CEK and PEK respectively into CEK* and PEK* with the target secure element 13 public key;
- Sending to the target secure element 13 the ciphered profile and the PEK*;
- receiving from the target secure element 13 a first signed message indicating that the profile has been installed successfully;
- removing the profile and sending to the target secure element 13 a second signed message with the source secure element 10 private key indicating that the profile in the source secure element 10 has been removed successfully and CEK*.

Finally, the invention concerns also a target secure element 13, configured for receiving a telecommunication profile from a source secure element 10 through the LPAs of devices comprising the source and target secure elements 10, 13, the secure element being configured for:
- receiving from the source secure element 10 its certificate and at least a signed profile ID;
- verifying the validity of the certificate based on the source certificate and signed profile ID;
- if the verification is positive, sending to the source secure element 10 a signed download request of the profile and a certificate of the target secure element 13;
- Receiving from the source secure element 10 a ciphered profile and a key PEK*;
- Deciphering the received key PEK* with its private key to obtain a key PEK, deciphering the profile with PEK and installing the profile;
- sending to the source secure element 10 a first signed message indicating that the profile has been installed successfully;
- receiving from the source secure element 10 a second signed message with the source secure element 10 private key indicating that the profile in the source secure element 10 has been removed successfully and CEK*;
- verifying the validity of the second signed message, deciphering CEK* to obtain CEK and deciphering the credentials with CEK.

The advantages of the invention are:
- What was before done in a SM-DP+ server is now done in the LPA 11 and at the embedded eUICC 10 level;
- There is a mutual acknowledgement of the transfer to ensure atomicity of the transaction. There is a certificate of deletion and the activation from the source to the target and the activation of the key itself.
- Anti cloning part, which is the atomicity, ensures the atomicity. The fact that credentials of the profiles are ciphered with an additional key, which is the credential instruction key, which is different from the profile encryption key itself, and it is done in two steps as we have seen before.
- It does not require to have an Internet connection to realize the transfer of the profile.

One application of the invention is for example when a user has a profile on his smartphone and wants to transfer this profile on his connected watch for a running.

All the steps of the invention are carried out by applets installed in the source and target devices.

## Claims

1. A method for exporting a telecommunication profile from a source secure element (10) to a target secure element (13) through the LPAs of devices comprising said source and target secure elements (10, 13), said method comprising:
- sending from said source secure element (10) its certificate and at least a signed profile ID to said target secure element (13);
- verifying at said target secure element (13) the validity of said certificate based on the source certificate and signed profile ID;
- if said verification is positive, sending from said target secure element (13) to said source secure element (10) a signed download request of said profile and a certificate of said target secure element (13);
- at said source secure element (10), verifying the certificate of said target secure element (13) authenticity, generating a Profile Encryption Key, PEK, and a Credential Encryption Key, CEK;
- Ciphering the credentials of said profile with CEK;
- Ciphering said profile including the ciphered credentials with PEK;
- Ciphers CEK and PEK respectively into CEK* and PEK* with the target secure element (13) public key;
- Sending from said source secure element (10) to said target secure element (13) said ciphered profile and said PEK*;
- at said target secure element (13), deciphering the received PEK* with its private key to obtain PEK, deciphering said profile with PEK and installing said profile;
- sending from said target secure element (13) to said source secure element (10) a first signed message indicating that said profile has been installed successfully;
- at said source secure element (10), when receiving said first signed message indicating that said profile has been installed successfully, removing said profile and sending to said target secure element (13) a second signed message with the source secure element (10) private key indicating that said profile in said source secure element (10) has been removed successfully and CEK*;
- at said target secure element (13), verifying the validity of said second signed message, deciphering CEK* to obtain CEK and deciphering said credentials with CEK.

2. A secure element, called source secure element (10), configured for exporting a telecommunication profile to a target secure element (13) through the LPAs of devices comprising said source and target secure elements (10, 13), said source secure element (10) being configured for:
- sending its certificate and at least a signed profile ID to said target secure element (13);
- receiving from said target secure element (13) a signed download request of said profile and a certificate of said target secure element (13);
- verifying the certificate of said target secure element (13) authenticity, generating a Profile Encryption Key, PEK, and a Credential Encryption Key, CEK;
- Ciphering the credentials of said profile with CEK;
- Ciphering said profile including the ciphered credentials with PEK;
- Ciphering CEK and PEK respectively into CEK* and PEK* with the target secure element (13) public key;
- Sending to said target secure element (13) said ciphered profile and said PEK*;
- receiving from said target secure element (13) a first signed message indicating that said profile has been installed successfully;
- removing said profile and sending to said target secure element (13) a second signed message with the source secure element (10) private key indicating that said profile in said source secure element (10) has been removed successfully and CEK*.

3. A secure element, called target secure element (13), configured for receiving a telecommunication profile from a source secure element (10) through the LPAs of devices comprising said source and target secure elements (10, 13), said secure element being configured for:
- receiving from said source secure element (10) its certificate and at least a signed profile ID;
- verifying the validity of said certificate based on the source certificate and signed profile ID;
- if said verification is positive, sending to said source secure element (10) a signed download request of said profile and a certificate of said target secure element (13);
- Receiving from said source secure element (10) a ciphered profile and a key PEK*;
- Deciphering the received key PEK* with its private key to obtain a key PEK, deciphering said profile with PEK and installing said profile;
- sending to said source secure element (10) a first signed message indicating that said profile has been installed successfully;
- receiving from said source secure element (10) a second signed message with the source secure element (10) private key indicating that said profile in said source secure element (10) has been removed successfully and CEK*;
- verifying the validity of said second signed message, deciphering CEK* to obtain CEK and deciphering said credentials with CEK.
